# EUROPÄISCHE PATENTSCHRIFT

(11) **EP 1 469 335 B1**
(45) Veröffentlichungstag und Bekanntmachung des Hinweises auf die Patenterteilung: **05.08.2009**
(21) Anmeldenummer: 04003564.4
(22) Anmeldetag: 18.02.2004
(51) Int. Cl.: G02B 23/24, G01B 11/00

(54) **Technoskop**
Endoscope
Endoscope

(30) Priorität: 16.04.2003 DE 10317488
(43) Veröffentlichungstag der Anmeldung: 20.10.2004
(73) Patentinhaber: Richard Wolf GmbH, 75438 Knittlingen (DE)
(72) Erfinder: Diener, Jörg, 75038 Oberderdingen (DE); Schlagenhauf, Frank, Dipl.-Ing., 75015 Bretten (DE)
(74) Vertreter: Hemmer, Arnd

(56) Entgegenhaltungen:
- US-A- 5 335 061
- US-A- 5 349 940
- US-A- 5 475 485
- US-A- 6 009 189
- PATENT ABSTRACTS OF JAPAN vol. 012, no. 477 (P-800), 14. Dezember 1988 (1988-12-14) & JP 63 193121 A (OLYMPUS OPTICAL CO LTD), 10. August 1988 (1988-08-10)

## Beschreibung

Die Erfindung betrifft ein Technoskop zur Untersuchung von Oberflächen in engen Räumen bzw. Hohlräumen.

Beispielsweise aus DE 27 30 203 A1 sind Technoskope bekannt, welche dazu eingesetzt werden, enge Räume, insbesondere schwer zugängliche Hohlräume von Maschinen und Motoren, optisch zu untersuchen. Solche Technoskope werden beispielsweise eingesetzt, um die Zylinderräume von Verbrennungsmotoren optisch zu untersuchen. Da die Serviceintervalle bei Motoren immer weiter erhöht werden, reicht eine einfache optische Inspektion der Brennräume häufig nicht mehr aus. Exakter lässt sich der Zustand des Motors durch Rauheitsmessungen der Laufflächen bestimmen. Dazu muss der Motor jedoch geöffnet werden, um an den Innenwandungen des Zylinders eine Rauheitsmessung der Laufflächen vornehmen zu können. Die Öffnung des Motors ist insbesondere bei großen Motoren, beispielsweise Schiffsmotoren, sehr zeit-und kostenaufwändig.

US 5,349,940 offenbart ein Endoskopsystem mit einem rotierenden Werkzeug am distalen Ende. Das distale Ende des Endoskopschaftes ist flexibel ausgebildet und weist neben dem antreibbaren Werkzeug eine Endoskopoptik auf, welche in distaler Richtung eine Beobachtung des Bearbeitungswerkzeuges ermöglicht. Dieses Endoskop eignet sich lediglich zur Bearbeitung eines Werkstückes, wobei durch die Optik eine visuelle Kontrolle möglich ist. Somit können mit diesem Instrument ebenfalls wie bei dem aus DE 27 30 203 A1 bekannten Stand der Technik Hohlräume lediglich optisch untersucht werden.

Auch die aus JP 63 193121, US 6,009,189, US 5,475,485 sowie US 5,335,061 bekannten Endoskope zur Untersuchung und/oder Bearbeitung von Hohlräumen ermöglichen lediglich eine optische Untersuchung der Hohlräume. Eine genauere Untersuchung, beispielsweise mittels Rauheitsmessungen, ermöglichen diese Instrumente nicht.

Es ist daher Aufgabe der Erfindung, eine Vorrichtung zu schaffen, welche eine vereinfachte messtechnische Untersuchung von Oberflächen in engen Räumen bzw. Hohlräumen ermöglicht.

Diese Aufgabe wird durch ein Technoskop mit den im Anspruch 1 angegebenen Merkmalen gelöst. Bevorzugte Ausführungsformen ergeben sich aus den Unteransprüchen.

Das erfindungsgemäße Technoskop eignet sich zur Untersuchung von Oberflächen in engen Räumen, beispielsweise den Zylinderwänden im Inneren von Verbrennungsmotoren. Das Technoskop weist einen Schaft auf, an dessen distalem Ende ein schwenkbarer Arm mit einer Messeinrichtung angeordnet ist. Dabei ist der schwenkbare Arm in einer ersten Lage so anordenbar, dass sich der Arm in Längsrichtung des Schaftes erstreckt. Darüber hinaus ist der Arm in zumindest eine zweite Lage verschwenkbar, in welcher sich der Arm abgewinkelt, d. h. in einem Winkel > 0° und < 180°, vorzugsweise in einem Winkel >0° und <90°, zu der Längsachse des Schaftes erstreckt. Diese Ausgestaltung ermöglicht, dass der schwenkbare Arm in seiner ersten Lage gemeinsam mit dem Schaft durch eine Öffnung in den zu untersuchenden Raum eingeführt wird. So lässt sich der Schaft mit dem gestreckten, d. h. sich in Richtung der Längsachse des Schaftes erstreckenden Arm, beispielsweise durch die Glüh- oder Zündkerzenbohrung oder die Einspritzdüsenbohrung in einen Zylinderraum eines Verbrennungsmotors einführen. Wenn der Arm sich im Inneren des zu untersuchenden Raumes, beispielsweise dem Zylinderraum eines Verbrennungsmotors befindet, kann der Arm in seine zweite Lage verschwenkt werden, so dass der Arm aus der Längsachse des Schaftes herausgeschwenkt wird. Dies ermöglicht, ein äußeres distales Ende des Armes in eine Position zu bringen, welche radial weiter beabstandet von der Längsachse des Schaftes gelegen ist als der Außenumfang des Schaftes. So ermöglicht der schwenkbare Arm, eine an dem schwenkbaren Arm angebrachte Messeinrichtung an die Oberfläche eines zu untersuchenden Raumes zu bringen, welche radial weiter von der Längsachse des Schaftes beabstandet ist als die Innenwandung der Öffnung, durch welche der Schaft eingesetzt wird. Auf diese Weise können Hinterschneidungen in geschlossenen Räumen durch die Messeinrichtung untersucht werden. So lässt sich durch Verschwenken des Armes die Messeinrichtung beispielsweise an die Innenwandung eines Zylinders eines Verbrennungsmotors bringen, welche einen größeren Abstand zur Längsachse des Schaftes aufweist als die Wandung der Zünd- bzw. Glühkerzenbohrung, durch welche der Schaft in den Zylinder eingeführt wird.

Die Messeinrichtung ist schwenkbar an dem Arm angebracht. Dies ermöglicht, dass die Messeinrichtung besser an zu untersuchende Oberflächen eines Hohlraumes angelegt werden kann. Dies gilt insbesondere dann, wenn die zu untersuchenden Oberflächen geneigt oder gekrümmt verlaufen. Die Messeinrichtung kann dann relativ zu dem Arm so verschwenkt werden, dass sie in optimale Anlage bzw. optimale Position zu der zu untersuchenden Oberfläche gebracht wird. Dabei ist die Messeinrichtung frei schwenkbar an dem Arm angebracht, so dass sie sich selbsttätig an die zu untersuchende Oberfläche anlegen kann.

Der Schwerpunkt der Messeinrichtung ist beabstandet zu einer Schwenkachse gelegen, um welche die Messeinrichtung schwenkbar ist. Diese Anordnung begünstigt die selbsttätige Ausrichtung der Messeinrichtung, wenn diese frei schwenkbar um die Schwenkachse relativ zu dem Arm ist. Der Schwerpunkt liegt dabei in einer Position vertikal unterhalb der Schwenkachse, so dass sich die Messeinrichtung immer selbsttätig in vertikaler Richtung ausrichtet.

Die Schwenkachse, um welche die Messeinrichtung relativ zu dem Arm schwenkbar ist, erstreckt sich vorzugsweise normal zu einer Schwenkebene, in welcher der Arm relativ zu dem Schaft schwenkbar ist. Dies ermöglicht, dass die Messeinrichtung in jeder Winkelstellung des Armes relativ zu der Längsachse des Schaftes in eine optimale Anlage bzw. Position zu der zu untersuchenden Oberfläche gebracht werden kann.

Abhängig vom Durchmesser bzw. Innenquerschnitt des zu untersuchenden Hohlraumes befindet sich der Arm in seiner zweiten Lage in unterschiedlichen Winkelpositionen, um den Abstand der Messeinrichtung von der Längsachse des Schaftes entsprechend anzupassen. Um die Messeinrichtung dennoch immer in einer vorgegebenen Winkellage relativ zu der zu untersuchenden Oberfläche, beispielsweise parallel zur Längsachse des Schaftes ausrichten zu können, ist die Messeinrichtung um eine Achse parallel zu der Schwenkachse des Armes bzw. normal zu der Schwenkebene des Armes schwenkbar.

Bevorzugt ist der Arm mit der Messeinrichtung in seiner ersten Lage vollständig innerhalb des Querschnittes des Schaftes angeordnet. Dies hat den Vorteil, dass eine Öffnung, in welche das erfindungsgemäße Technoskop eingeführt wird, keinen größeren Querschnitt als der Schaft des Technoskopes aufweisen muss. Der größte Querschnitt des Technoskopes wird durch seinen Schaft bestimmt. Wenn das Technoskop mit dem Schaft in eine Öffnung eingeführt ist, kann der Arm mit der Messeinrichtung innerhalb eines größeren Hohlraumes hinter der Öffnung ausgeschwenkt werden, um die Messeinrichtung an eine Innenwandung des Hohlraumes zu bringen, um die Innenwandung messtechnisch zu untersuchen.

Bevorzugt ist das proximale Ende des Armes an dem Schaft angelenkt und die Messeinrichtung am distalen Ende des Armes angebracht. Diese Anordnung ermöglicht, den maximalen radialen Abstand der Messeinrichtung von der Längsachse des Schaftes zu erreichen, um auch große Hohlräume bzw. deren Innenwandungen mit Hilfe der Messeinrichtung untersuchen zu können. Das proximale Ende des Armes ist dabei in der Nähe der Längsachse des Schaftes angelenkt. Die maximale radiale Auslenkung der Messeinrichtung von der Längsachse des Schaftes wird bei einem Winkel von 90° zwischen der Längsachse des Armes und der Längsachse des Schaftes erreicht. Dabei hängt die maximale radiale Auslenkung der Messeinrichtung im Wesentlichen nur von der Länge des Armes ab. Dies hat den Vorteil, dass das Technoskop leicht so angepasst werden kann, dass sehr große Hohlräume untersucht werden können, ohne dass der Durchmesser des Schaftes vergrößert werden muss. Für größere Hohlräume muss der Arm lediglich entsprechend lang ausgebildet werden. Der Schaftdurchmesser des Technoskopes kann gering gehalten werden, so dass das Technoskop durch sehr kleine Öffnungen in Hohlräume einführbar ist.

Die Messeinrichtung ist bevorzugt ein Rauheitsmessgerät. Dies ermöglicht, mit Hilfe des erfindungsgemäßen Technoskopes Rauheitsmessungen beispielsweise an Innenwandungen von Zylinderräumen von Verbrennungsmotoren vorzunehmen. Das Rauheitsmessgerät kann dabei in bekannter Weise ausgebildet sein. Geeignete Rauheitsmessgeräte werden beispielsweise von der Firma Mahr unter der Bezeichnung PFM bzw. PFM 2 angeboten. Anstelle eines Rauheitsmessgerätes können jedoch auch beliebige andere Messeinrichtungen vorgesehen sein, um gewünschte Messungen im Inneren des zu untersuchenden Raumes und insbesondere an dessen Oberflächen ausführen zu können. Beispielsweise könnte ein Laser-Messsystem vorgesehen sein.

Die Messeinrichtung ist bevorzugt derart schwenkbar relativ zu dem Arm angeordnet, dass eine Längsachse der Messeinrichtung in der ersten Lage des Armes parallel zu der Längsachse des Schaftes und der Längsachse des Armes verläuft. Dies bedeutet, dass das gesamte Technoskop in der ersten Lage des Armes gestreckt in Längsrichtung des Schaftes angeordnet ist und einen minimalen Querschnitt, welcher vorzugsweise durch den maximalen Querschnitt des Schaftes begrenzt wird, aufweist. So kann das Technoskop leicht in eine enge Öffnung, beispielsweise eine Zünd- bzw. Glühkerzen- oder Einspritzdüsenbohrung in einen Zylinderraum eingeführt werden.

Die Schwenkachse der Messeinrichtung ist vorzugsweise zwischen zwei in Längsrichtung einander entgegengesetzten Enden der Messeinrichtung und beabstandet von diesen Enden angeordnet. Die beiden vonund zu der Schwenkachse beabstandeten Enden der Messeinrichtung dienen dabei als Anlageschultern bzw. Gegenlager, welche eine einfache Ausrichtung der Messeinrichtung an der zu untersuchenden Wandung bzw. Oberfläche ermöglichen. Insbesondere wenn die Messeinrichtung so ausgebildet ist, dass ihr Schwerpunkt außerhalb ihrer Schwenkachse gelegen ist, kommt bei einer schrägen bzw. geneigten Oberfläche zunächst eines der Enden der Messeinrichtung beim Verschwenken des Armes mit der zu untersuchenden Oberfläche des Hohlraumes in Kontakt. Welches der Enden zunächst mit der Oberfläche in Kontakt kommt, liegt insbesondere an der Neigung der Oberfläche zur Vertikalen. Wenn das erste Ende mit der Oberfläche in Kontakt gekommen ist, wird der Arm weiter von der Längsachse des Schaftes weg verschwenkt, wodurch die Schwenkachse der Messeinrichtung mehr an die zu untersuchende Oberfläche bewegt wird und schließlich auch das zweite Ende der Messeinrichtung an der Oberfläche zur Anlage kommt. Auf diese Weise ist eine sehr einfache zwangsweise Ausrichtung der Messeinrichtung parallel zu der zu untersuchenden Oberfläche möglich.

Bevorzugt ist der Arm über ein im Schaft angeordnetes Antriebsmittel relativ zu dem Schaft verschwenkbar. Beispielsweise kann im Inneren des Schaftes eine Betätigungsstange angeordnet sein, deren distales Ende an dem Arm beabstandet zu der Schwenkachse des Armes angelenkt ist. Durch Linearbewegung der Betätigungsstange in Längsrichtung des Schaftes kann auf diese Weise der Arm relativ zu der Längsachse des Schaftes verschwenkt werden. Alternativ können andere geeignete Antriebsmittel im Schaft angeordnet sein, um den Arm relativ zur Längsachse des Schaftes verschwenken zu können. Dies können beispielsweise elektromechanische, pneumatische oder hydraulische Antriebsmittel sein.

Zum Verschwenken des Armes relativ zu dem Schaft ist vorzugsweise am proximalen Ende des Schaftes ein Betätigungsmittel zur Betätigung des Antriebsmittels angeordnet. Über das Betätigungsmittel kann somit das Antriebsmittel bewegt werden, um den Arm zu verschwenken. Beispielsweise kann ein Verstellrad vorgesehen sein, welches bei Drehung eine Linearbewegung einer Betätigungsstange parallel zur Längsachse des Schaftes verursacht, welche wiederum, wie oben beschrieben, ein Verschwenken des Armes relativ zu der Längsachse des Schaftes bewirkt.

Weiter bevorzugt ist in den Schaft des erfindungsgemäßen Technoskopes eine Optik einsetzbar. Die Optik kann in bekannter Weise wie bei bekannten Technoskopen und Endoskopen ausgebildet sein. Dabei ist die Optik vorzugsweise so ausgestaltet, dass sie einen Blick in radialer Richtung ausgehend von dem Schaft ermöglicht, so dass der Bereich, welcher durch die Messeinrichtung untersucht wird, gleichzeitig optisch untersucht werden kann. Anstelle einer Optik kann auch ein Videoübertragungssystem gemäß bekannten Video-Technoskopen Verwendung finden.

Gemäß einer bevorzugten Ausführungsform weist das erfindungsgemäße Technoskop eine Führungshülse auf, in welche der Schaft einsetzbar ist und welche in einer Öffnung eines zu untersuchenden Raumes fixierbar ist. Die Führungshülse dient zur genauen Positionierung und Fixierung des Technoskopes in dem zu untersuchenden Hohlraum. Bevorzugt wird zunächst die Fixierungshülse in der Öffnung, durch welche das Technoskop in den zu untersuchenden Raum eingeführt werden soll, fixiert und anschließend das Technoskop durch die Fixierungshülse in den zu untersuchenden Raum eingeführt.

Bevorzugt weist die Führungshülse an ihrem Außenumfang ein Gewinde auf. Mit diesem Gewinde kann die Führungshülse in ein Gewinde einer Öffnung des zu untersuchenden Hohlraumes eingeschraubt werden. Dazu ist der Außendurchmesser der Fixierungshülse und das an diesem angebrachte Gewinde vorzugsweise auf ein vorhandenes Gewinde in der Öffnung des zu untersuchenden Objektes angepasst. Beispielsweise kann das Außengewinde der Führungshülse an ein Innengewinde einer Zünd- bzw. Glühkerzenbohrung oder einer Einspritzdüsenbohrung eines Verbrennungsmotors angepasst sein. Zur Anbringung der Fixierungshülse wird in diesem Fall zunächst die Einspritzdüse oder die Zünd- bzw. Glühkerze aus dem Motor herausgeschraubt, und anschließend kann die Fixierungshülse in die entsprechende Bohrung eingeschraubt und anschließend das Technoskop durch die Fixierungshülse in den Zylinderraum eingeführt werden.

Der Schaft ist vorzugsweise in der Führungshülse in seiner Längsrichtung verschiebbar und/oder um seine Längsachse drehbar gehalten. Dies ermöglicht, den Schaft möglichst spielfrei im Inneren der Führungshülse zu bewegen, um auf diese Weise die Messeinrichtung in verschiedene Positionen im Inneren des zu untersuchenden Hohlraumes bringen zu können oder mit Hilfe der in dem Schaft angeordneten Optik verschiedene Bereiche des Hohlraumes betrachten zu können. Bei diesen Bewegungen wird der Schaft in der Führungshülse geführt, so dass beispielsweise der radiale Abstand der Messeinrichtung von der Längsachse des zu untersuchenden Hohlraumes konstant gehalten werden kann.

Dabei sind vorzugsweise Skalen zum Ablesen einer Einschubtiefe und/oder einer Winkelposition des Schaftes relativ zu der Führungshülse vorgesehen. Mit Hilfe dieser Skalen kann der untersuchte Bereich des Hohlraumes durch entsprechende Koordinaten bestimmt und dokumentiert werden. Über die Skalen lässt sich die Position der Messeinrichtung im Inneren des zu untersuchenden Hohlraumes ablesen. Zusätzlich kann eine Skala zum Ablesen der Winkelposition des Armes relativ zu der Längsachse des Schaftes vorgesehen sein, so dass bei bekannter Länge des Armes auch die radiale Position der Messeinrichtung relativ zur Längsachse des Schaftes abgelesen werden kann. Darüber hinaus kann dadurch bei bekannter Länge des Armes auch der Abstand der Messeinrichtung vom distalen Ende des Schaftes in Richtung der Längsachse des Schaftes bestimmt werden.

Gemäß einer besonderen Ausführungsform kann der Arm flexibel ausgebildet sein. Bei einem solchen Arm kann auf ein Gelenk bzw. eine Schwenkachse zwischen dem Arm und dem Schaft verzichtet werden. Stattdessen ist der Arm selber flexibel ausgebildet und aufgrund seiner Flexibilität beliebig verschwenkbar, so dass das distale Ende des Armes in eine Winkellage zur Längsachse des Schaftes gebracht werden kann. Dadurch kann auch mit einem flexiblen Arm eine am distalen Ende des Armes angeordnete Messeinrichtung in eine gegenüber dem Schaft radial ausgelenkte Position gebracht werden, um eine Oberfläche im Inneren eines Hohlraumes zu untersuchen. Die Ausgestaltung des flexiblen Armes entspricht dabei dem technischen Aufbau, wie er von flexiblen Endoskopen bzw. Fiberskopen bekannt ist.

Anstelle einer Messeinrichtung kann alternativ ein Bearbeitungswerkzeug an dem distalen Ende des Armes angeordnet sein. Dies ermöglicht, mit dem erfindungsgemäßen Technoskop nicht allein Messungen, sondern auch Bearbeitungen in schwer zugänglichen Räumen und insbesondere an deren Innenwandungen durchzuführen.

Weiter bevorzugt ist in den Schaft zumindest ein weiterer abwinkelbarer Schaft einsetzbar. Ein solcher zusätzlicher Schaft kann vorzugsweise vom proximalen Ende her in den Schaft eingeführt werden, um durch den zusätzlichen Schaft hindurch beispielsweise ein Bearbeitungswerkzeug in den zu untersuchenden bzw. zu bearbeitenden Raum einzuführen. Solche Bearbeitungswerkzeuge können z. B. Zangen, Bürsten oder Reinigungsdüsen sein, um die Oberflächen in dem zu untersuchenden Raum reinigen und/oder bearbeiten zu können. Am distalen Ende des weiteren Schaftes ist entweder ein starrer, über ein Gelenk abwinkelbarer Arm angeordnet oder der Schaft ist zumindest in seinem distalen Bereich flexibel ausgebildet, um den Schaft radial auslenken zu können und radial beabstandete Oberflächen in dem Raum erreichen zu können. Die Ausgestaltung des weiteren Schaftes entspricht dabei bevorzugt der Ausgestaltung des ersten Schaftes und des Armes, wie sie oben beschrieben wurde.

Nachfolgend wird die Erfindung beispielhaft anhand der beigefügten Figuren beschrieben. In diesen zeigt:
- Fig. 1: eine Schnittansicht eines Zylinderraumes mit einem eingesetzten Technoskop gemäß der Erfindung,
- Fig. 2: eine Schnittansicht entsprechend Fig. 1 bei geneigter Lage des Zylinderraumes,
- Fig. 3: eine Schnittansicht entsprechend Figuren 1 und 2, bei welcher der Zylinderraum in einer Richtung entgegengesetzt zu Fig. 2 geneigt ist und
- Fig. 4: eine Schnittansicht eines Zylinderraumes mit einem eingesetzten Technoskop gemäß einer zweiten Ausführungsform.

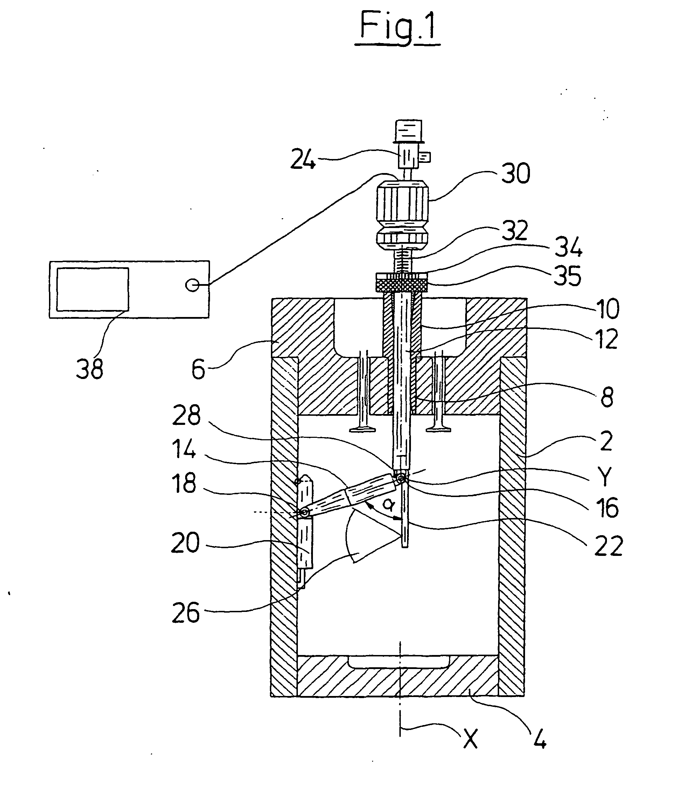

Fig. 1 zeigt eine Schnittansicht eines Zylinders 2 eines Verbrennungsmotors, beispielsweise eines Schiffsmotors. Bei der Untersuchung befindet sich der Kolben 4 vorzugsweise im unteren Totpunkt. In dem Zylinderkopf 6 befindet sich neben den Einlass- und Auslassöffnungen mit den Ventilen eine Bohrung 8. Die Bohrung 8 ist zentral in dem Zylinder in Richtung der Längsachse X angeordnet. Die Bohrung 8 dient im Betrieb zur Aufnahme einer Einspritzdüse des Zylinders. Zur Untersuchung des Innenraumes des Zylinders 2 ist die Einspritzdüse (hier nicht gezeigt) herausgeschraubt. In die Bohrung 8, aus der die Einspritzdüse entfernt ist, ist eine Führungshülse 10 eingeschraubt, welche ein Außengewinde korrespondierend zu einem Innengewinde in der Bohrung 8 aufweist. In die Führungshülse 10 ist der Schaft 12 des Technoskopes vom proximalen Ende der Führungshülse 10 her eingesetzt. Dabei wird der Schaft 12 durch die Führungshülse 10 von außen in den Innenraum des Zylinders 2 eingeführt. Am distalen Ende des Schaftes 12 ist ein Arm 14 um eine Schwenkachse 16 schwenkbar angeordnet. Die Schwenkachse 16 erstreckt sich normal zur Längsachse X und schneidet diese. Am distalen Ende des Armes 14 ist eine zweite Schwenkachse 18 ausgebildet, über die eine Messeinrichtung in Form eines Rauheitsmessgerätes schwenkbar mit dem Arm 14 verbunden ist.

Durch Verschwenken des Armes 14 in Richtung des Winkels α relativ zu der Längsachse X des Schaftes 12 wird die Messeinrichtung 20 zur Anlage an der Innenwandung des Zylinders 2 gebracht. Die Schwenkachse 18 erstreckt sich dabei parallel zu der Schwenkachse 16, so dass die Messeinrichtung 20 sich parallel zu der Längsachse X und der Innenwandung des Zylinders 2 erstrecken kann, unabhängig von der Größe des Winkels α. Mit zunehmendem Winkel α wird die Messeinrichtung 20 in eine radial weiter von der Längsachse X beabstandete Position gebracht. So können Zylinderinnenräume mit unterschiedlichen Durchmessern untersucht werden.

Im Inneren des Schaftes 12 ist ferner eine sich parallel zu der Längsachse X erstreckende Optik 22 angeordnet. Die Optik 22 ist vom proximalen Ende her in den Schaft 12 einsetzbar. Dies ermöglicht, dass die Optik 22 auch entnommen werden kann, um andere Instrumente durch den Schaft 12 in den Zylinderraum 2 einzuführen. Die Optik 22 ist in bekannter Weise ausgebildet und weist an ihrem proximalen Ende 24 eine Einblicköffnung oder Anschlüsse für eine Kamera oder andere Bildverarbeitungs- sowie Beleuchtungseinrichtungen auf. Die in Fig. 1 gezeigte Optik gewährt ein Blickfeld 26 in radialer Richtung bezüglich der Längsachse X, so dass durch die Optik 22 der durch die Messeinrichtung 20 zu untersuchende Bereich der Zylinderwandung 2 betrachtet werden kann. Alternativ können auch andere Optiken 22 eingesetzt werden, welche ein Blickfeld 26 in anderer Richtung aufweisen.

Im Inneren des Schaftes 12 ist ferner eine Betätigungsstange 28 angeordnet, welche sich parallel zur Längsachse X durch den Schaft 12 hindurch erstreckt. Das distale Ende der Betätigungsstange 28 ist gelenkig an dem Arm 14 angelenkt. Dabei ist der Anlenkungspunkt der Betätigungsstange 28 an dem Arm 14 von der Schwenkachse 16 in Richtung der Längsachse Y des Armes 14 beabstandet. Dies ermöglicht, dass durch Längsbewegung der Betätigungsstange 28 in Richtung der Längsachse X der Arm 14 in Richtung des Schwenkwinkels α um die Schwenkachse 16 verschwenkt werden kann. An ihrem proximalen Ende steht die Betätigungsstange 28 mit einem Verstellrad 30 in Wirkverbindung. Die Betätigungsstange 28 und das Verstellrad 30 wirken so zusammen, dass durch Drehung des Verstellrades 30 um die Längsachse X die Betätigungsstange 28 in Richtung der Längsachse X linear bewegt wird und auf diese Weise ein Verschwenken des Armes 14 veranlasst.

Ferner ist im Bereich des proximalen Endes des Schaftes 12 an diesem eine Skala 32 angebracht, an welcher die Einschubtiefe des Schaftes in die Führungshülse 10 in Richtung der Längsachse X abgelesen kann. Die jeweilige Einschubtiefe ist abhängig davon, an welcher Position an der Innenwandung des Zylinders 2 durch die Messeinrichtung 20 eine Messung vorgenommen werden soll. Die Einschubtiefe ist somit auch vom jeweiligen Motor und dessen Bauart abhängig.

Am proximalen Ende der Führungshülse 10 ist ein Skalenring 34 angeordnet, mittels dem die Winkelposition des Schaftes 12 relativ zu der Führungshülse 10 abgelesen werden kann, wenn der Schaft 12 um die Längsachse X in der Führungshülse 10 gedreht wird. Der Skalenring 34 wird nach dem Einschrauben der Führungshülse 10 in dem Zylinderkopf 6 in einer vorgegebenen Winkelposition justiert, so dass an dem Zahlenring bei Drehung des Schaftes 12 um die Längsachse X eine Winkelstellung des Schaftes 12 relativ zu dem Zylinder 2 abgelesen werden kann. Auf diese Weise kann über die Skala 32 und den Skalenring 34 die Position, an welcher die Messeinrichtung 20 eine Oberflächenmessung vornimmt, bestimmt werden, um die Messergebnisse anschließend genau dokumentieren zu können.

Wie ausgeführt ist der Schaft 12 im Inneren der Führungshülse in Richtung der Längsachse X linear bewegbar und um die Längsachse X drehbar. Dabei ist der Schaft 12 vorzugsweise spielfrei in der Führungshülse 10 geführt. Ferner ist am proximalen Ende der Führungshülse 10 ein Klemmring 36 vorgesehen, mit welchem der Schaft 12 in der Führungshülse 10 festgeklemmt werden kann, um ihn in seiner Position relativ zu der Führungshülse 10 zu fixieren.

Die Messeinrichtung 20 ist über eine Mess- bzw. Steuerleitung, welche durch das Innere des Armes 14 und den Schaft 12 verläuft und am proximalen Ende aus dem Schaft 12 austritt, mit einem Steuer- bzw. Anzeigegerät 38 verbunden. Das Anzeigegerät 38 steuert bzw. überwacht die von der Messeinrichtung 20 durchgeführte Messung und zeigt die Messergebnisse an oder gibt die Messergebnisse in anderer Weise aus.

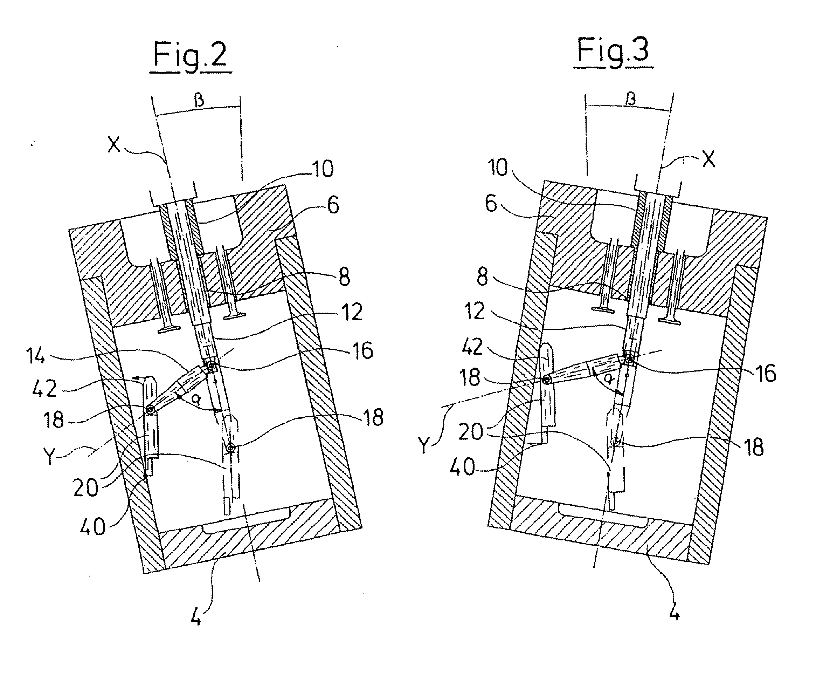

Das Einsetzen des Technoskopes in den Zylinder 2 wird näher anhand der Figuren 2 und 3 erläutert. Die Figuren 2 und 3 zeigen Schnittansichten entsprechend Fig. 1, wobei in den in Figuren 2 und 3 gezeigten Beispielen die Längsachse X gegenüber der Vertikalen um einen Winkel β geneigt ist. In Figuren 2 und 3 ist der Arm 14 mit der Messeinrichtung 20 in einer gestreckten, ersten Lage gezeigt, in welcher sich die Längsachse Y des Armes 14 und die Messeinrichtung 20 in Richtung der Längsachse X des Schaftes erstrecken. In dieser Lage ist das gesamte Technoskop gestreckt, so dass der Außendurchmesser des Technoskopes auch im Bereich der Messeinrichtung 20 und des Armes 14 dem Außendurchmesser des Schaftes 12 entspricht. Ferner ist in Figuren 2 und 3 zusätzlich der Arm 14 in einer verschwenkten Lage gezeigt, in welcher er um den Schwenkwinkel α bezüglich der Längsachse X verschwenkt ist, so dass die Messeinrichtung 20 mit der Innenwandung des Zylinders 2 in Kontakt kommt. Das Verschwenken des Armes 14 erfolgt, wie oben beschrieben, durch die Betätigungsstange 28.

In der gestreckten ersten Lage, in welcher sich die Achse Y in Richtung der Achse X erstreckt und auch die Messeinrichtung 20 sich in Längsrichtung des Armes 14 erstreckt, kann der Schaft 12 mit der am distalen Ende über den Arm 14 angebrachten Messeinrichtung 20 durch die Führungshülse 10 in den Innenraum des Zylinders 2 eingeschoben werden. Die ganze Einrichtung weist einen geringen Durchmesser auf, so dass das Technoskop leicht durch die relativ kleine Bohrung 8 für die Einspritzdüse eingeführt werden kann. Wenn die erforderliche Einschubtiefe erreicht ist, welche, wie oben beschrieben, an der Skala 32 abgelesen werden kann, wird der Schaft 12 über den Klemmring 36 (in Figuren 2 und 3 nicht gezeigt) in der Führungshülse 10 fixiert. Anschließend wird durch Betätigung der Betätigungsstange 28 über das Verstellrad 30 der Arm 14 um den Winkel α ausgeschwenkt, so dass die Messeinrichtung 20 in eine radial weiter von der Längsachse X beabstandete Position gebracht wird und mit der Innenwandung des Zylinders 2 in Kontakt kommt.

Die Messeinrichtung 20 ist dabei um die Schwenkachse 18 frei beweglich. Darüber hinaus befindet sich der Schwerpunkt der Messeinrichtung 20 in vertikaler Richtung unterhalb der Schwenkachse 18, so dass die Messeinrichtung 20 sich immer selbsttätig in vertikaler Richtung auszurichten versucht. Dies hat den Vorteil, dass, wenn der Arm 14 in die gestreckte Position parallel zu der Längsachse X gebracht wird, sich die Messeinrichtung selbsttätig ebenfalls in dieser gestreckten Lage parallel zu der Längsachse X ausrichtet. Darüber hinaus begünstigt diese Anordnung des Schwerpunktes der Messeinrichtung 20 die Anlage der Messeinrichtung 20 an die Innenwandung des Zylinders 2, wie in Figuren 2 und 3 zu sehen ist.

Im Beispiel gemäß Fig. 2 kommt beim Ausschwenken des Armes 14 aufgrund der selbsttätigen vertikalen Ausrichtung der Messeinrichtung 20 zunächst das untere Gegenlager 14 an einem ersten Ende der Messeinrichtung 20 mit der Innenwandung des Zylinders 2 in Kontakt. Wird nun der Arm 14 weiter verschwenkt, wobei der Winkel α vergrößert wird, bewegt sich die Schwenkachse 18 weiter zu der Innenwandung des Zylinders 2, wodurch auch das zweite Gegenlager 42 am entgegengesetzten Ende der Messeinrichtung 20 auf die Innenwandung des Zylinders 2 zu bewegt wird, bis es ebenfalls mit der Innenwandung des Zylinders 2 in Kontakt kommt. Wenn beide Gegenlager 40 und 42 mit der Innenwandung in Kontakt sind, liegt die Messeinrichtung 20 vollständig an der Innenwandung des Zylinders 2 an, so dass eine Messung der Oberflächenrauheit an der Innenwandung durchgeführt werden kann.

Wenn der Zylinder 2 bezüglich der Vertikalen in umgekehrter Richtung geneigt ist, wie in Fig. 3 gezeigt, kommt beim Ausschwenken des Armes 14 zunächst das Gegenlager 42 mit der Innenwandung des Zylinders 2 in Kontakt. Wird der Arm 14 weiter verschwenkt, wird dadurch die Schwenkachse 18 näher zu der Zylinderwandung 2 hin bewegt, wodurch auch das Gegenlager 40 zu der Innenwandung des Zylinders 2 bewegt wird, bis es an dieser anliegt. Auf diese Weise wird immer eine vollständige Anlage der Messeinrichtung 20 an der zu untersuchenden Oberfläche erreicht.

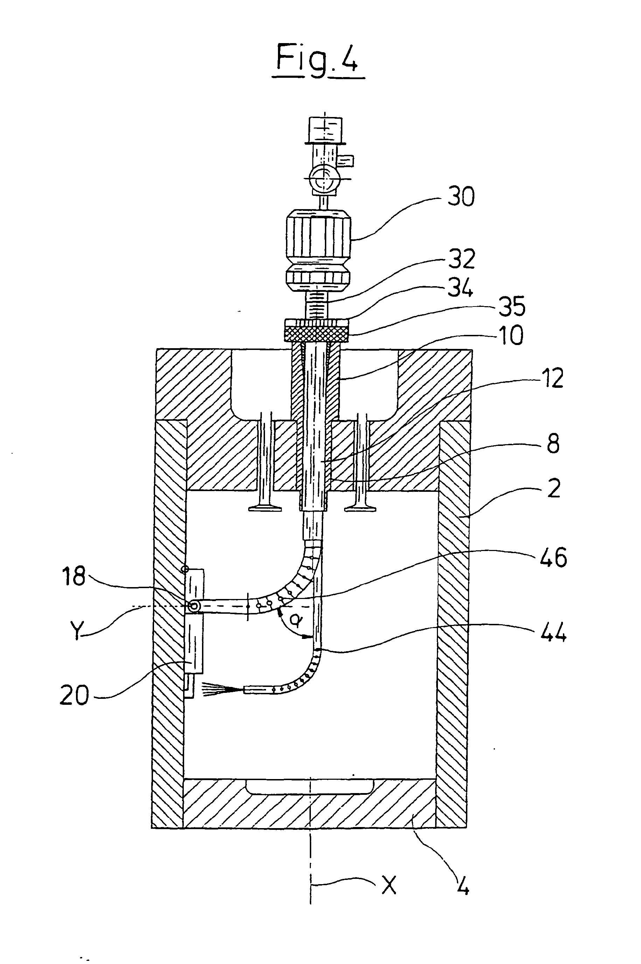

Fig. 4 zeigt eine Schnittansicht eines Zylinders 2 eines Verbrennungsmotors, beispielsweise eines Schiffsmotors, entsprechend der Darstellung in Fig. 1. Das in den Zylinder 2 in Fig. 4 eingesetzte Technoskop entspricht im Wesentlichen dem anhand von Figuren 1 bis 3 beschriebenen Technoskop, wobei bei dem Technoskop gemäß Fig. 4 anstelle des Arms 14 ein flexibler Arm 46 vorgesehen ist. Der flexible Arm 46 ist wie von flexiblen Endoskopen bzw. Technoskopen bekannt, beliebig krümm- bzw. abwinkelbar. Durch Biegung des Armes 46, über ein im Inneren des Armes 46 angeordnetes Betätigungsmittel kann das distale Ende des Armes 46 so ausgelenkt werden, dass die Messeinrichtung 20 in eine radial von der Längsachse X beabstandete Position gebracht wird. Dabei können beliebige Schwenkwinkel β zwischen der Längsachse X und der Längsachse Y des distalen Endes des Armes 46 erreicht werden. Im gezeigten Beispiel ist der Winkel β gleich 90 Grad. Der flexible Arm 46 ersetzt somit den oben beschriebenen Arm 14 mit der Schwenkachse 16 zwischen Arm 14 und Schaft 12. Der flexible Arm 46 ist am distalen Ende des Schaftes 12 angebracht.

Zusätzlich ist bei dem Ausführungsbeispiel gemäß Fig. 4 ein weiterer Schaft 44 vorgesehen, welcher vom proximalen Ende her in den Schaft 12 einführbar ist. Der Schaft 44 ist im Bereich seines distalen Endes ebenfalls abwinkelbar bzw. krümmbar ausgebildet, entsprechend der Ausgestaltung des Armes 46. Der Schaft 44 kann zur Aufnahme einer Optik oder zur Einführung von Bearbeitungswerkzeugen, wie beispielsweise Zangen, Bürsten oder Reinigungsdüsen, in den Innenraum des Zylinders 2 verwendet werden. Durch die Möglichkeit des Krümmens bzw. Abwinkelns des Schaftes 44, ist es möglich, das distale Ende des Schaftes 44 ebenfalls in die Nähe der Innenwandung des Zylinders 2 zu bringen, um dort Bearbeitungen oder Untersuchungen durchzuführen. Der flexible Teil des Schaftes 44 ist in der Weise ausgebildet, wie es von flexiblen Endoskopen bzw. Technoskopen bekannt ist. Zur Auslenkung ist ein entsprechendes Betätigungsmittel im Inneren des Schaftes 44 vorgesehen.
Im Übrigen entspricht der Aufbau des Technoskops dem anhand der Figuren 1 bis 3 beschriebenen Aufbau, weshalb in Fig. 4 dieselben Bezugsziffern für dieselben Bauteile verwendet werden und auf eine weitere Beschreibung der bereits anhand von Figuren 1 bis 3 beschriebenen Bauteile verzichtet wird.

### Bezugszeichenliste

- 2 -: Zylinder
- 4 -: Kolben
- 6 -: Zylinderkopf
- 8 -: Bohrung
- 10 -: Führungshülse
- 12 -: Schaft
- 14 -: Arm
- 16, 18 -: Schwenkachsen
- 20 -: Messeinrichtung
- 22 -: Optik
- 24 -: proximales Ende
- 26 -: Blickfeld
- 28 -: Betätigungsstange
- 30 -: Verstellrad
- 32 -: Skala
- 34 -: Skalenring
- 36 -: Klemmring
- 38 -: Anzeigegerät
- 40, 42 -: Gegenlager
- 44: Schaft
- 46: flexibler Arm

- β -: Winkel
- α -: Schwenkwinkel

- X -: Längsachse des Zylinders 2 und des Schaftes 12
- Y -: Längsachse des Armes 14

## Patentansprüche

1. Technoskop zur Untersuchung von Oberflächen in engen Räumen, welches einen Schaft (12) aufweist, an dessen distalen Ende ein schwenkbarer Arm (14) angeordnet ist, welcher aus einer ersten Lage, in welcher sich der Arm (14) in Längsrichtung (X) des Schaftes erstreckt, in eine zweite Lage verschwenkbar ist, in welcher sich der Arm (14) abgewinkelt zu der Längsachse (X) des Schaftes (12) erstreckt, **dadurch gekennzeichnet, dass** an dem schwenkbaren Arm (14) eine Messeinrichtung (20) frei schwenkbar angeordnet ist, wobei der Schwerpunkt der Messeinrichtung (20) beabstandet zu einer Schwenkachse (18), um welche die Messeinrichtung (20) frei schwenkbar ist, gelegen ist.

2. Technoskop nach Anspruch 1, bei welchem sich eine Schwenkachse (18), um welche die Messeinrichtung (20) relativ zu dem Arm (14) schwenkbar ist, normal zu einer Ebene erstreckt, in welcher der Arm (14) relativ zu dem Schaft (12) schwenkbar ist.

3. Technoskop nach Anspruch 1 oder 2, bei welchem der Arm (14) mit der Messeinrichtung (20) in seiner ersten Lage vollständig innerhalb des Querschnittes des Schaftes (12) angeordnet ist.

4. Technoskop nach einem der vorangehenden Ansprüche, bei welchem das proximale Ende des Armes (14) an dem Schaft (12) angelenkt und die Messeinrichtung (20) am distalen Ende des Armes (14) angebracht ist.

5. Technoskop nach einem der vorangehenden Ansprüche, bei welchem die Messeinrichtung (20) ein Rauheitsmessgerät ist.

6. Technoskop nach einem der vorangehenden Ansprüche, bei welchem die Messeinrichtung (20) derart schwenkbar angeordnet ist, dass eine Längsachse der Messeinrichtung (20) in der ersten Lage des Armes (14) parallel zu der Längsachse (X) des Schaftes (12) und der Längsachse (Y) des Armes (14) verläuft.

7. Technoskop nach einem der vorangehenden Ansprüche, bei welchem die Schwenkachse (18) der Messeinrichtung (20) zwischen zwei in Längsrichtung einander entgegengesetzten Enden (40, 42) der Messeinrichtung (20) und beabstandet von diesen Enden (40, 42) angeordnet ist.

8. Technoskop nach einem der vorangehenden Ansprüche, bei welchem der Arm (14) über ein im Schaft (12) angeordnetes Antriebsmittel (28) relativ zu dem Schaft (12) verschwenkbar ist.

9. Technoskop nach Anspruch 8, bei welchem am proximalen Ende des Schaftes (12) ein Betätigungsmittel (30) zur Betätigung des Antriebsmittels (28) angeordnet ist.

10. Technoskop nach einem der vorangehenden Ansprüche, bei welchem in den Schaft (12) eine Optik (22) einsetzbar ist.

11. Technoskop nach einem der vorangehenden Ansprüche, welches eine Führungshülse (10) aufweist, in die der Schaft (12) einsetzbar ist und welche in einer Öffnung (8) eines zu untersuchenden Raumes fixierbar ist.

12. Technoskop nach Anspruch 11, bei welchem die Führungshülse (10) an ihrem Außenumfang ein Gewinde aufweist.

13. Technoskop nach Anspruch 11 oder 12, bei welchem in der Führungshülse (10) der Schaft (12) in seiner Längsrichtung (X) verschiebbar und/oder um seine Längsachse (X) drehbar gehalten ist.

14. Technoskop nach Anspruch 13, bei welchem Skalen (32, 34) zum Ablesen einer Einschubtiefe und/oder einer Winkelposition des Schaftes (12) relativ zu der Führungshülse (10) vorgesehen sind.

15. Technoskop nach einem der vorangehenden Ansprüche, bei welchem der Arm (14) flexibel ausgebildet ist.

16. Technoskop nach einem der vorangehenden Ansprüche, bei welchem anstelle einer Messeinrichtung (20) ein Bearbeitungswerkzeug an dem distalen Ende des Armes (14) angeordnet ist.

17. Technoskop nach einem der vorangehenden Ansprüche, bei welchem in den Schaft (12) zumindest ein weiterer abwinkelbarer Schaft (44) einsetzbar ist.

## Claims

1. A technoscope for examining surfaces in confined spaces, which comprises a shank (12) on whose distal end a pivotable arm (14) is arranged, said pivotable arm able to be pivoted out of a first position, in which the arm (14) extends in the longitudinal direction (X) of the shank, into a second position, in which the arm (14) extends bent at an angle to the longitudinal axis (X) of the shank (12), **characterized in that** a measuring means (20) is arranged in a freely pivotable manner on the pivotable arm (14), wherein the centre of gravity of the measuring means (20) is situated distanced to a pivot axis (18), about which the measurement means (20) is freely pivotable.

2. A technoscope according to claim 1, with which a pivot axis (18), about which the measuring means (20) is pivotable relative to the arm, extends normally to a plane, in which the arm (14) is pivotable relative to the shank (12).

3. A technoscope according to claim 1 or 2, with which the arm (14) with the measuring means (20) in its first position is arranged completely within the cross section of the shank (12).

4. A technoscope according to one of the preceding claims, with which the proximal end of the arm (14) is articulated on the shank (12), and the measuring means (20) is attached on the distal end of the arm (14).

5. A technoscope according to one of the preceding claims, with which the measuring means (20) is a roughness measurement apparatus.

6. A technoscope according to one of the preceding claims, with which the measuring means (20) is pivotably arranged in a manner such that a longitudinal axis of the measuring means (20) in the first position of the arm (14) runs parallel to the longitudinal axis (X) of the shank (12) and the longitudinal axis (Y) of the arm (14).

7. A technoscope according to one of the preceding claims, with which the pivot axis (18) of the measuring means (20) is arranged between two ends (40, 42) of the measuring means (20), which are opposite to one another in the longitudinal direction, and is arranged distanced to these ends (40, 42).

8. A technoscope according to one of the preceding claims, with which the arm (14) is pivotable relative to the shank (12) via a drive means (28) arranged in the shank (12).

9. A technoscope according to claim 8, with which an actuation means (30) for actuating the drive means (28) is arranged at the proximal end of the shank (12).

10. A technoscope according to one of the preceding claims, with which optics (22) may be inserted into the shank (12).

11. A technoscope according to one of the preceding claims, which comprises a guide sleeve (10), into which the shank (12) may be inserted and which may be fixed in an opening (8) of a space to be examined.

12. A technoscope according to claim 11, with which the guide sleeve (10) has a thread on its outer periphery.

13. A technoscope according to claim 11 or 12, with which the shank (12), in the guide sleeve (10), is held displaceably in its longitudinal direction (X) and/or rotatably about its longitudinal axis (X).

14. A technoscope according to claim 13, with which scales (32, 34) are provided for reading off the penetration depth and/or an angular position of the shank (12) relative to the guide sleeve (10).

15. A technoscope according to one of the preceding claims, with which the arm (14) is designed in a flexible manner.

16. A technoscope according to one of the preceding claims, with which instead of a measuring means (20), a machining tool is arranged at the distal end of the arm (14).

17. A technoscope according to one of the preceding claims, with which at least a further shank (44) able to be bent at an angle may be inserted into the shank (12).

## Revendications

1. Technoscope destiné à examiner des surfaces dans des espaces restreints, qui présente un fût (12) au niveau de l'extrémité distale duquel est disposé un bras orientable (14) qui peut pivoter d'une première position, dans laquelle le bras (14) s'étend dans la direction longitudinale (X) du fût, vers une seconde position, dans laquelle le bras (14) s'étend en formant un angle avec l'axe longitudinal (X) du fût (12), **caractérisé en ce qu'**au niveau du bras orientable (14) est disposé de façon à pivoter librement un équipement de mesure (20), le centre de gravité de l'équipement de mesure (20) étant à distance par rapport à l'axe de pivotement (18) autour duquel l'équipement de mesure (20) peut pivoter librement.

2. Technoscope selon la revendication 1, dans lequel un axe de pivotement (18), autour duquel l'équipement de mesure (20) peut pivoter par rapport au bras (14), s'étend perpendiculairement à un plan dans lequel le bras (14) peut pivoter par rapport au fût (12).

3. Technoscope selon la revendication 1 ou 2, dans lequel le bras (14) avec l'équipement de mesure (20) est disposé dans sa première position entièrement au sein de la section transversale du fût (12).

4. Technoscope selon l'une des revendications précédentes, dans lequel l'extrémité proximale du bras (14) est articulée au niveau du fût (12) et l'équipement de mesure (20) est disposé au niveau de l'extrémité distale du bras (14).

5. Technoscope selon l'une des revendications précédentes, dans lequel l'équipement de mesure (20) est un appareil de mesure de la rugosité.

6. Technoscope selon l'une des revendications précédentes, dans lequel l'équipement de mesure (20) est disposé de façon orientable de façon telle qu'un axe longitudinal de l'équipement de mesure (20) s'étend dans la première position du bras (14) parallèlement à l'axe longitudinal (X) du fût (12) et à l'axe longitudinal (Y) du bras (14).

7. Technoscope selon l'une des revendications précédentes, dans lequel l'axe de pivotement (18) de l'équipement de mesure (20) est disposé entre deux extrémités (40, 42) de l'équipement de mesure (20) mutuellement opposées dans la direction longitudinale et à distance de ces extrémités (40, 42).

8. Technoscope selon l'une des revendications précédentes, dans lequel le bras (14) peut être pivoté par rapport au fût (12) par le biais d'un moyen d'entraînement (28) disposé dans le fût (12).

9. Technoscope selon la revendication 8, dans lequel un moyen d'actionnement (30) permettant d'actionner le moyen d'entraînement (28) est disposé au niveau de l'extrémité proximale du fût (12).

10. Technoscope selon l'une des revendications précédentes, dans lequel on peut insérer un dispositif optique (22) dans le fût (12).

11. Technoscope selon l'une des revendications précédentes, qui présente une douille de guidage (10), dans laquelle le fût (12) peut être inséré et qui peut être fixée dans une ouverture (8) d'un espace à examiner.

12. Technoscope selon la revendication 11, dans lequel la douille de guidage (10) présente un filetage au niveau de sa périphérie externe.

13. Technoscope selon la revendication 11 ou 12, dans lequel, dans la douille de guidage (10), le fût (12) est maintenu de façon à pouvoir glisser dans sa direction longitudinale (X) et/ou à pouvoir pivoter autour de son axe longitudinal (X).

14. Technoscope selon la revendication 13, dans lequel sont prévues des graduations (32, 34) permettant de lire une profondeur d'enfichage et/ou une position angulaire du fût (12) par rapport à la douille de guidage (10).

15. Technoscope selon l'une des revendications précédentes, dans lequel le bras (14) est exécuté de façon flexible.

16. Technoscope selon l'une des revendications précédentes, dans lequel, à la place d'un équipement de mesure (20), on dispose un outil d'usinage au niveau de l'extrémité distale du bras (14).

17. Technoscope selon l'une des revendications précédentes, dans lequel on peut insérer dans le fût (12) au mois un autre fût (44) pouvant se couder.
